# EUROPEAN PATENT APPLICATION

(11) **EP 4 742 750 A1**
(43) Date of publication of application: **13.05.2026**
(21) Application number: 24211439.5
(22) Date of filing: 07.11.2024
(51) Int. Cl.: H04W 36/00, H04L 65/1016

(54) **DEVICE AND METHOD FOR SESSION CONTINUITY IN CASE OF SATELLITE HANDOVER**

(71) Applicant: NTT DOCOMO, INC., Tokyo 100-6150 (JP)
(72) Inventor: BHATTACHARJEE, Sushmit, 80687 Munich (DE); MUTIKAINEN, Jari, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a method for continuing an Internet Multimedia Subsystem session between a first mobile terminal and a second mobile terminal in case of a handover the first mobile terminal from a source serving satellite to a target serving satellite is described. The method comprises receiving, by an Internet Multimedia Subsystem Application Server, a message comprising an identification of the target serving satellite and sending, by the Internet Multimedia Subsystem Application Server, in reaction to reception of the message, a re-invite message to an Internet Multimedia Subsystem entity serving the second mobile terminal.

## Description

The present disclosure relates to devices and methods for session continuity in case of a satellite handover, in particular a method for continuing an Internet Multimedia Subsystem session between a first mobile terminal and a second mobile terminal in case of a handover the first mobile terminal from a source serving satellite to a target serving satellite.

A mobile communication network may use regenerative-based satellite access. This means that a satellite has an onboard base station and can thus act as a serving base station for a radio cell, which is for example remotely located from other, ground-based, base stations of the mobile communication network. It is also possible that multiple satellites providing base stations in that manner are connected via satellite links, such that a satellite constellation of more than one satellite may operate multiple radio cells of a mobile communication network. A special feature in such a satellite-based communication scenario (i.e. where one or more satellites act as base station(s)) is local (onboard) routing, where traffic between mobile terminals served by one or more satellites is routed with a satellite or a satellite constellation without transiting via a ground segment, i.e. a ground-based part of the mobile communication network.

When a mobile terminal is served by a satellite, mobility from both sides, i.e. of the mobile terminal as well as of the satellite (which is typically a Low Earth Orbit satellite), may lead to a loss of coverage for the mobile terminal. This makes a handover of the mobile terminal, to another serving satellite, if possible, necessary. Efficient approaches to provide continuation of a communication session, in particular IMS (Internet Multimedia Subsystem) sessions, in case of handover of a mobile terminal from a source serving satellite to a target serving satellite are therefore desirable.

According to one embodiment, a method for continuing an Internet Multimedia Subsystem session between a first mobile terminal and a second mobile terminal in case of a handover the first mobile terminal from a source serving satellite to a target serving satellite is provided. The method comprises receiving, by an Internet Multimedia Subsystem Application Server, a message comprising an identification of the target serving satellite and sending, by the Internet Multimedia Subsystem Application Server, in reaction to reception of the message, a re-invite message to an Internet Multimedia Subsystem entity serving the second mobile terminal.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: illustrates a scenario where the functionality of one or more base stations is provided by one or more satellites.
- Figure 3: illustrates the usage of AGWs (IMS Access Gateways) in an IMS (Internet Multimedia Subsystem) session between two mobile terminals, possibly using UE(User Equipment)-Sat-UE communication.
- Figure 4: illustrates a procedure for continuing an IMS session according to an embodiment.
- Figure 5: shows a flow diagram illustrating a method for continuing an Internet Multimedia Subsystem session (e.g. a call, which may be audio or video) between a first mobile terminal and a second mobile terminal in case of a handover the first mobile terminal from a source serving satellite to a target serving satellite.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for continuing an Internet Multimedia Subsystem session between a first mobile terminal and a second mobile terminal in case of a handover the first mobile terminal from a source serving satellite to a target serving satellite, comprising receiving, by an Internet Multimedia Subsystem Application Server, a message comprising an identification of the target serving satellite and sending, by the Internet Multimedia Subsystem Application Server, in reaction to reception of the message, a re-invite message to an Internet Multimedia Subsystem entity serving the second mobile terminal.
Example 2 is the method of example 1, wherein the Internet Multimedia Subsystem Application Server receives the message from a Policy Control Function (of a core network of a mobile communication network, whose radio access network comprises base stations implemented by the source serving satellite and the target serving satellite as well as a serving satellite of the second mobile terminal).
Example 3 is the method of example 1 or 2, wherein the Internet Multimedia Subsystem Application Server receives the message from the Policy Control Function according to a subscription of the Internet Multimedia Subsystem Application Server at the Policy Control Function to be notified about changes of the serving satellite of the first mobile terminal (i.e. the IMS AS may subscribe to the PCF to be notified about a handover of the serving satellite (i.e. a change of satellite ID) and receives the message as a result of the subscription).
Example 4 is the method of any one of examples 1 to 3, wherein the Internet Multimedia Subsystem Application Server subscribes at the Policy Control Function to be notified about changes in the serving satellite of the first mobile terminal.
Example 5 is the method of any one of examples 1 to 4, comprising sending, by the Internet Multimedia Subsystem Application Server, an indication about whether the Internet Multimedia Subsystem session should be continued by routing traffic (in particular in the target serving satellite, but also in a serving satellite of the second mobile terminal) between the first mobile terminal and the other mobile terminal avoiding a core network on the ground (i.e. whether UE-Sat-UE communication should be used for continuing the IMS session).
Example 6 is the method of any one of examples 1 to 5, comprising determining, by the Internet Multimedia Subsystem Application Server, whether the Internet Multimedia Subsystem session should be continued by routing traffic between the first mobile terminal and the other mobile terminal avoiding a core network on the ground.
Example 7 is the method of example 6, wherein determining whether the Internet Multimedia Subsystem session should be continued by routing traffic between the first mobile terminal and the other mobile terminal avoiding a core network on the ground comprises determining whether there is inter-satellite connectivity (i.e. an ISL) between the target serving satellite of the first mobile terminal and a serving satellite of the second mobile terminal (only in that case the Internet Multimedia Subsystem session can be continued using UE-Sat-UE communication). In other words, the determination includes determining whether the target serving satellite belongs to the same satellite constellation as the source serving satellite.
Example 8 is the method of any one of examples 1 to 7, comprising notifying, by the Internet Multimedia Subsystem Application Server, an Internet Multimedia Subsystem component (e.g. "remote" P-CSCF) serving the second mobile about an Internet Protocol address to be used for sending data to the first mobile terminal for continuing the Internet Multimedia Subsystem session.
Example 9 is the method of example 8, comprising including, by the Internet Multimedia Subsystem Application Server, the Internet Protocol address to be used for sending data to the first mobile terminal in the re-invite message.
Example 10 is the method of example 8 or 9, comprising selecting, by the Internet Multimedia Subsystem Application Server, the Internet Protocol address to be used for sending data to the first mobile terminal from an Internet Protocol address of an Internet Multimedia Subsystem Access Gateway in the target serving satellite and an Internet Protocol address of an Internet Multimedia Subsystem Access Gateway in a ground network (depending on whether UE-Sat-UE communication should be used for continuing the IMS session: IP of AGW of serving satellite if UE-Sat-UE communication should be used, IP of AGW of ground network else.).
Example 11 is the method of example 10, comprising sending, by the Internet Multimedia Subsystem Application Server, in reaction to an acknowledgement of the continuation of the Internet Multimedia Subsystem session by the second mobile terminal (or, in other words, a (positive) acknowledgement of the re-invite by the second mobile terminal) message, a further re-invite message to the first mobile terminal notifying the first mobile terminal about an Internet Protocol address to be used by the first mobile terminal for sending data to the second mobile terminal for continuing the Internet Multimedia Subsystem session.
Example 12 is the method of example 11, comprising selecting, by the Internet Multimedia Subsystem Application Server, the Internet Protocol address to be used by the first mobile terminal for sending data to the second mobile terminal from a further Internet Protocol Address of the Internet Multimedia Subsystem Access Gateway in the target serving satellite and a further Internet Protocol Address of the Internet Multimedia Subsystem Access Gateway in the ground network (depending on whether UE-Sat-UE communication should be used for continuing the IMS session: IP of AGW of serving satellite if UE-Sat-UE communication should be used, IP of AGW of ground network else.).
Example 13 is the method of any one of examples 1 to 12, wherein the message comprising the identification of the target serving satellite indicates a change of serving satellite of the first mobile terminal.
Example 14 is a communication network component implementing an Internet Multimedia Subsystem Application Server and configured to perform a method of any one of examples 1 to 13.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

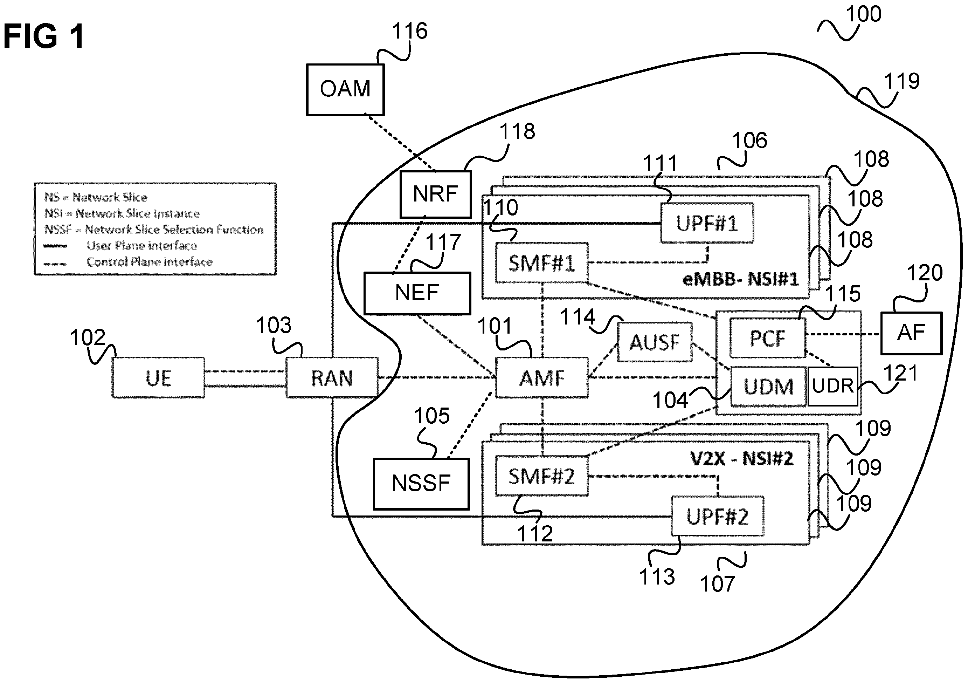

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or 6G or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository) 121. The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

The Network Slice Selection Assistance Information (NSSAI) represents a set of parameters used to identify and describe a (core) network slice. It includes two key elements:
- Slice Differentiator (SD): it is a globally unique identifier that distinguishes between different network slices within a 5G network. The SD is used to ensure that the UE selects the correct slice during communication.
- Slice Service Type (SST): it indicates the specific service or application type associated with a network slice. The SST provides high-level information about the characteristics and requirements of a slice, such as low latency, high bandwidth, or ultra-reliable communication.

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice. In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function). The core network 119 may further include a Network Exposure Function (NEF) 117.

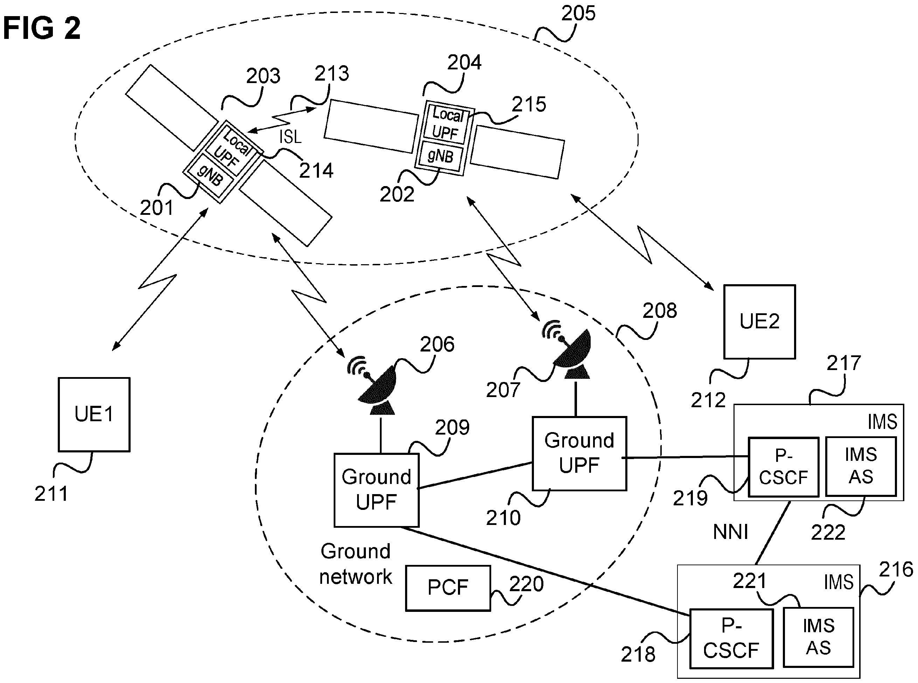

Base stations may be implemented by satellites. This means that communication between UEs under the coverage of one or more serving satellites can be supported, using regenerative-based satellite access (onboard gNBs). Such a scenario is illustrated in figure 2.

Figure 2 illustrates a scenario where the functionality of one or more base stations 201, 202 is provided by one or more satellites 203, 204 (typically LEO (Low Earth Orbit) satellites).

In the example of figure 1, a first satellite 203 provides a first base station (gNB) 201 and a second satellite 204 provides a second base station 202. The two satellites 203, 204 form a satellite constellation 205 (which may have one or more satellites).

Each satellite 203, 204 is connected via a respective satellite antenna 206, 207 to a ground network 208 which includes a core network of the mobile communication network to the RAN of which the base stations 201, 202 belong.

The ground network 208 in particular includes a ground UPF 209, 210 for each satellite 206, 207 (which may also be the same ground UPF for each satellite 206, 207).

In the example of figure 2, the first base station 201 serves a first UE 211 and the second base station 202 serves a second UE 212, i.e. the first base station 201 operates a radio cell in which the first UE 211 is located and the second base station 202 operates a radio cell in which the second UE 212 is located. In other words, the first satellite 203 is the serving satellite for the first UE 211 and the second satellite 204 is the serving satellite for the second UE 212.

For communication between UEs 211, 212 served by satellite, i.e. communication (e.g. call) between two UEs 211, 212 via at least one satellite (i.e. at least one of them being served by a satellite as base station), a ground UPF 209, 210 is selected by the respective SMF 110, 112 and acts as a PDU session anchor (PSA).

When the first UE 211 and the second UE 212 are communicating, e.g. the first UE 211 sends data to the second UE 212, the data is transmitted from the first UE 211 to the first satellite 203, can then be sent to the ground network 208, from there to the second satellite 204 and from there to the second UE 212. This is referred to as satellite-based communication via the ground segment.

If, however, the two satellites 203, 204 can communicate via an inter-satellite link (ISL) 213 or if the same satellite serves both UEs 211, 212 delivery delay of data (i.e. user plane traffic) can be reduced by routing the data locally within the satellite constellation 205 (possibly within the same satellite if it is serving both UEs 211, 212). This is denoted by "local (onboard) routing (of traffic)" or "UE-SAT-UE communication", "local media routing" or "optimized routing of traffic" and may for example be of interest for delay-sensitive services. In other words, UE-Satellite(SAT)-UE communication refers to a communication between UEs under the coverage of one or more serving satellites, using satellite access without the user traffic transiting through the ground segment. UE-SAT-UE communication is expected to reduce end-to-end delay in the order of tens of milliseconds.

For the UE-SAT-UE communication, the SMF 110, 112 inserts an onboard (i.e. on-satellite) UPF 214, 215 (acting as PSA or "L-PSA") during call setup procedures providing a local switching capability.

For UE-SAT-UE communication for, e.g., an IMS (Internet Protocol Multimedia Subsystem) session (e.g. call), with two serving satellites 203, 204, i.e. UEs 211 and 212 being served by different satellites, to use UE-SAT-UE communication, it is necessary that there is an ISL 213 between the two satellites 203, 204, i.e. direct IP connectivity needs to be present between the satellites 203, 204. According to various embodiments, in the scenario of figure 2, for an IMS call via an IMS 216 serving the first UE 211 and a second IMS 217 serving the second UE (wherein the two IMS may also be the same IMS), each IMS 216, 217 comprises a respective P-CSCF (proxy call session control function) 218, 219 which determines that UE-Satellite-UE communication between the UEs 211, 212 is possible if the two satellites 203, 204 can communicate with each other.

In cases of mobility i.e., if one or both of the UEs 211, 212 or one or both of the satellites 203, 204 move, a (SIP (Session Initiation Protocol) RE-INVITE message needs to be initiated for transport address re negotiation for an IMS session (i.e. an IMS audio or video call). The sending or triggering of a RE-INVITE may be done by a UE 211, 212 or a 218, 219. However, both these approaches have an impact on the UE 211, 212 and/or the P-CSCF 218, 210. A RE-INVITE is a SIP request that can be sent by either the caller (i.e. the originating UE, acting as originating SIP client) or the callee (i.e. the terminating UE, acting as terminating SIP client) during a confirmed dialog, to modify the session parameters and establish a new SDP (Session Description Protocol) negotiation.

According to various embodiments, an approach is provided which allows continuing an ongoing IMS session (e.g. call) during mobility without any major UE and/or P-CSCF impact. This approach uses a PCF 220 of the ground network 208, e.g. corresponding to PCF 115, as well as an IMS AS (application server) 221, 222 of the respective IMS 216, 217.

According to various embodiments, a procedure for IMS call continuity during mobility for UE-Satellite-UE communication is provided. In the following, the UE for which a handover is carried out, i.e. which loses coverage from a satellite (due to the serving satellite moving and/or the UE itself moving) and for which therefore the serving satellite changes (from a first serving satellite, denoted as source serving satellite to a second serving satellite, denoted as target serving satellite) is denoted as the local UE while the other is denoted as the remote UE. In the following, it is assumed that the first UE 201 is the local UE. Accordingly, the first IMS 216 and the first ground UPF 209 relate to the "local side" while the second IMS 217 and the second ground UPF 210 relate to the "remote side". Both the local side and the remote side may be the originating side of the IMS call that should be continued (while the other is the terminating side), i.e. a handover can happen on the originating side as well as on the remote side. The local side is not to be confused with the local traffic routing in the serving satellite for UE-Sat-UE communication, which happens, if UE-Sat-UE communication is used, on both sides (i.e. for the local UE as well as for the remote UE).

It should further be noted that the UEs 211, 212 can be served by different PCFs. It is assumed that the PCF 220 is the responsible for the first UE 211 (i.e. the local UE).

According to various embodiments, the entity responsible for triggering sending a RE-INVITE is the PCF 220 and the (first) IMS AS 221 of the local side sends the RE-INVITE to the remote side. This avoids both UE impact as well as major P-CSCF impacts.

The PCF 220 sends a trigger message upon determining that there is a change of Satellite (for the first UE 211) towards the IMS AS 221 of the first IMS 216 serving the first UE 211. The IMS AS 221 sends an indication SIP (Session Initiation Protocol) message to the P-CSCF 218 (serving the first UE 211) based on verification of UE-Sat-UE communication (i.e. verification that UE-Sat-UE communication can and should be supported for the continuation of the IMS session). The first IMS AS 221 then sends a RE-INVITE towards the remote side with the updated IP addresses. The remote side updates the IP addresses based on the RE-INVITE message received and sends a SIP 200 OK (RE-INVITE), i.e. an acknowledgement of the RE-INVITE, to the first IMS AS 221. Then, the normal IMS call management procedure resumes.

According to further embodiments, the procedure includes informing the remote side and the local UE about IP (Internet Protocol) addresses to use for the continuation of the IMS session. These IP addresses depend on whether the IMS session is continued via UE-Sat-UE communication or via ground (i.e. media data transmission via the ground network 208). It should be noted that the original IMS session may have been provided using UE-Sat-UE communication or using the ground network. Accordingly, the continuation of the IMS call may be a continuation of UE-Sat-UE communication (but with one changed satellite), a continuation of ground network communication, a fallback of UE-Sat-UE communication to ground network communication (e.g. because there is no ISL 213 between the target serving satellite and the second satellite 204) and an establishment of UE-Sat-UE communication (when the originating IMS session used the ground network for transmission of media data).

According to various embodiments, the IP addresses about which the local UE and the remote side are notified are IP addresses of AGWs (IMS Access Gateways).

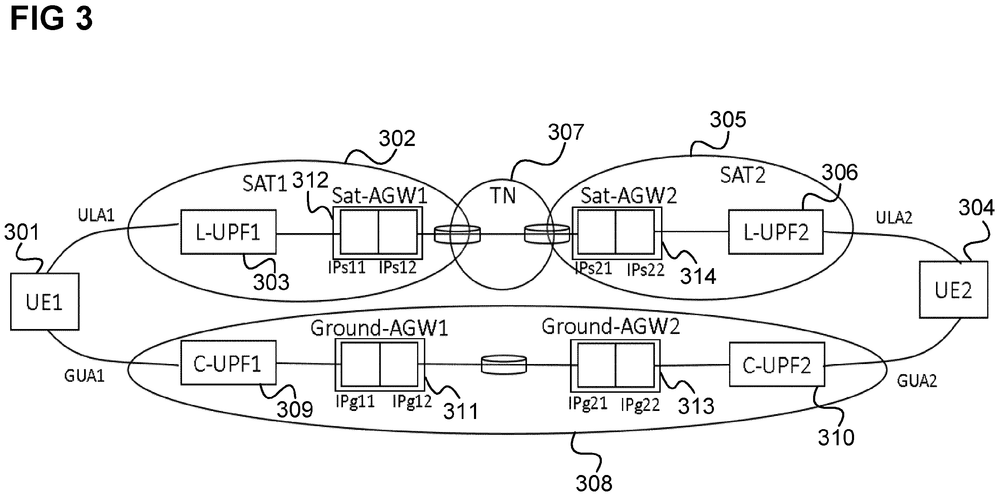

Figure 3 illustrates the usage of AGWs in an IMS session between two mobile terminals, possibly using UE-Sat-UE communication.

As in the scenario of figure 2, a first UE 301 is served by a first satellite 302 implementing a local UPF 303 and a second UE 304 is served by a second satellite 305 implementing local UPF 306. The two satellites 305, 306 are connected via a transport network 307. A ground network 308 includes a ground UPF 309 for the first UE 301 and a ground UPF 310 for the second UE 304.

According to various embodiments, the following is carried out.
1) For IMS call setup, the originating UE (assumed to be the first UE 301 here) sends an INVITE with an SDP Offer to the P-CSCF 218 (of its IMS).
2) The originating P-CSCF 218 (i.e. the originating UE's P-CSCF) assigns (i.e. allocates) one AGW 311 on the ground (denoted by Ground-AGW) and another AGW 312 in its serving satellite 305 (denoted by Satellite-AGW). For this, for example, it discovers the Satellite-AGW e.g. based on Satellite ID (and Constellation ID) of the served UE or based on the IP realm of the UE IP address.
3) The originating P-CSCF 218 instructs the AGWs 311, 312(it has assigned) to reserve media resources for each media line towards the remote network.
4) The originating P-CSCF 218 sends an INVITE with SDP offer towards the remote network. The SDP offer contains one IP address candidate from the Satellite-AGW 312, and another IP address candidate from Ground-AGW 311. In figure 3, these IP addresses are denoted by "IPs12" and "IPg12".
5) The terminating P-CSCF 219 (i.e. the P-CSCF serving the terminating UE) assigns (i.e. allocates) one AGW 313 on the ground and another AGW 314 in its serving satellite 306.
6) The terminating P-CSCF 219 instructs the AGWs 313, 314 to reserve media resources for each media line towards the originating IMS (i.e. the IMS of the originating UE).
7) The terminating P-CSCF 219 sends an INVITE with SDP offer towards the local SIP client (i.e. the UE that it serves). The SDP offer contains IP addresses of the Satellite-AGW 314 and of the Ground-AGW 313. In figure 3, these IP addresses are denoted by "IPs22" and "IPg22".
8) The SDP answer from the terminating UE 304 is processed in similar manner on the originating side as the SDP offer on the terminating side: the originating P-CSCF 218 informs each of its assigned AGWs 311, 312 about the received IP addresses from the terminating side. In figure 3, these IP addresses are denoted by "IPs21" and "IPg21". Further, the originating P-CSCF 218 informs the originating UE 301 about the IP addresses of the originating AGWs 311, 312. In figure 3, these IP addresses are denoted by ''IPs11" and "IPg11".

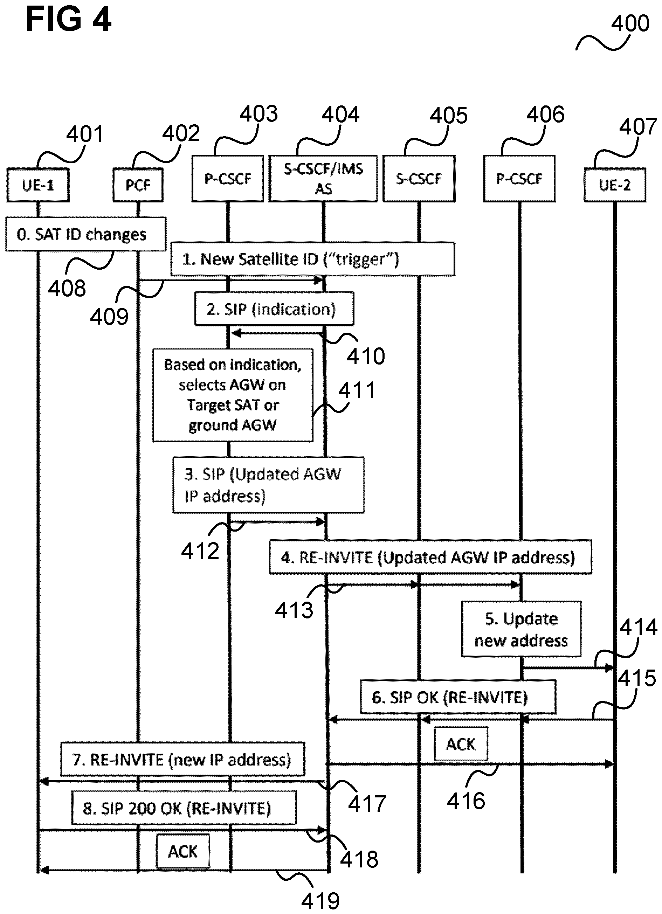

Figure 4 illustrates a procedure for continuing an IMS session according to an embodiment.

The procedure takes place between a first UE 401 (the "local" UE, e.g. corresponding to the first UE 211, which is assumed to be the UE for which a handover from a source satellite to a target satellite is carried out), a (local) PCF 402, a local P-CSCF 403, a (local) IMS AS (e.g. reached by the local P-CSCF via a local S-CSCF), a remote S-CSCF 405 (Serving Call Session Control Function of the remote IMS 217), a remote P-CSCF 406 and a second UE 407 (the "remote" UE, e.g. corresponding to the second UE 212).

Upon a change of the serving satellite of the first UE 401, in 408, an AMF (serving the first mobile terminal and being part in the core network of the ground network 208) recognizes the corresponding change in Satellite ID and notifies an SMF (also serving the first mobile terminal and being part in the core network of the ground network 208) about the change, e.g. via a Nsmf_PDUSession_UpdateSMContext message. The SMF in turn informs the PCF 402 about the change, e.g. via a Nsmf_EventExposure_Notify message.

In 409, the PCF 402 forwards the identification of the target serving satellite to the IMS AS 404, which is for example subscribed to the PCF 402 to be notified about this kind of information, by sending a message, e.g. a Npcf_PolicyAuthorization_Notify message. This message serves (i.e. is interpreted by the IMS AS 404 as) a trigger message for sending a RE-INVITE.

In 410, the IMS AS 404 (which now knows about the satellite identifications of both the local side as well as the remote side, the latter from session setup) verifies whether the target serving satellite (of the first UE 401) belongs to same constellation as the serving satellite of the second UE 407 and is connected via an ISL to the serving satellite of the second UE 407 to determine whether UE-Sat-UE communication is possible.

If UE-Sat-UE communication is possible, it decides whether it should be used for continuing the IMS session (e.g. it may further take into account a policy) and, according to the outcome of the decision, it sends an indication SIP message to the local P-CSCF 403.

In 411, the local P-CSCF 403 selects the AGW 312 on the target serving satellite (if UE-Sat-UE communication is to be used for continuing the IMS session) and the AGW 311 in the ground network else. Accordingly, in 412, it transmits the AGW IP address (denoted as "updated" AGW IP address in figure 4) to be used by the remote side (IPs12 or IPg12) to the IMS AS 404 in 412 which the IMS AS 404 includes in a RE-INVITE it sends to the remote side, specifically the remote P-CSCF 406 (e.g. via the remote S-CSCF 405), in 413.

In 414, the remote P-CSCF 406 forwards the RE-INVITE (updated SIP request) to the remote UE 407.

In 415, the remote UE 407 sends a SIP OK (RE-INVITE) to the IMS AS 404 (via the remote P-CSCF 406 and the remote S-CSCF 405) to which the IMS AS 404 responds in 416 with an ACK (i.e. an SIP acknowledgement message).

In 417, the local P-CSCF 403 sends a RE-INVITE to the local UE 401 including the IP address of the AGW to be used by the local UE 301 to send data, i.e. IPs11 or IPg1 1 depending on whether UE-Sat-UE communication is to be used for continuing the IMS session.

In 418, the local UE 401 sends an SIP OK (RE-INVITE) to the IMS AS 404 (via the local P-CSCF 403 and the local S-CSCF) to which the IMS AS 404 responds in 419 with an ACK.

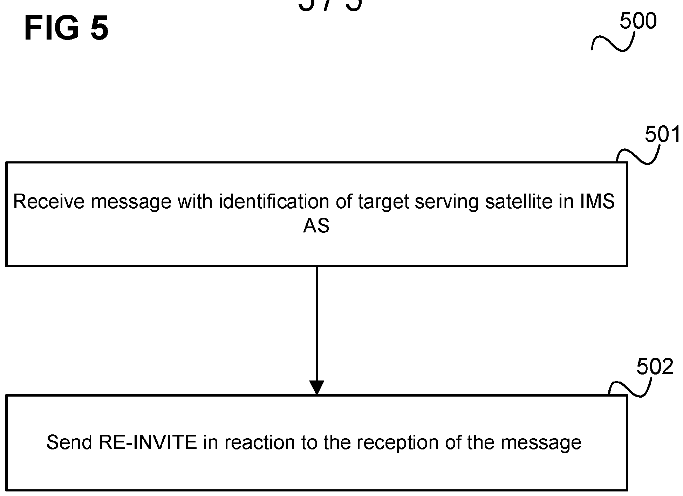

In summary, according to various embodiments, a method is provided as illustrated in figure 5.

Figure 5 shows a flow diagram 500 illustrating a method for continuing an Internet Multimedia Subsystem session (e.g. a call, which may be audio or video) between a first mobile terminal and a second mobile terminal in case of a handover the first mobile terminal from a source serving satellite to a target serving satellite.

In 501, an Internet Multimedia Subsystem Application Server receives a message comprising an identification of the target serving satellite.

In 502, the Internet Multimedia Subsystem Application Server sends, in reaction to reception of the message, a re-invite message (i.e. a SIP Re-INVITE) to an Internet Multimedia Subsystem entity (i.e. IMS component, e.g. the remote P-CSCF) serving the second mobile terminal.

According to various embodiments, in other words, the notification (e.g. by the PCF) about a new satellite identification, is interpreted by the IMS AS as a trigger to send a RE-INVITE to the remote side.

So, according to various embodiments, the PCF has the capability to trigger a RE-INVITE procedure via an IMS AS and the IMS AS has the capability to send a RE-INVITE (in reaction to a trigger by the PCF). Further, according to various embodiments, the IMS has the capability to send a SIP indication message which indicates whether US-Sat-UE communication should be used for continuation of the IMS session. Accordingly, for example, a voice or video call in a UE-Sat-UE communication scenario can be continued without impacting the local UE and without majorly impacting the local P-CSCF.

The method of figure 5 is carried out by a communication network component implementing an IMS AS, wherein the communication network component may be implemented by (or comprise) one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for continuing an Internet Multimedia Subsystem session between a first mobile terminal and a second mobile terminal in case of a handover the first mobile terminal from a source serving satellite to a target serving satellite, comprising:
receiving, by an Internet Multimedia Subsystem Application Server, a message comprising an identification of the target serving satellite; and
sending, by the Internet Multimedia Subsystem Application Server, in reaction to reception of the message, a re-invite message to an Internet Multimedia Subsystem entity serving the second mobile terminal.

2. The method of claim 1, wherein the Internet Multimedia Subsystem Application Server receives the message from a Policy Control Function.

3. The method of claim 1 or 2, wherein the Internet Multimedia Subsystem Application Server receives the message from the Policy Control Function according to a subscription of the Internet Multimedia Subsystem Application Server at the Policy Control Function to be notified about changes of the serving satellite of the first mobile terminal.

4. The method of any one of claims 1 to 3, wherein the Internet Multimedia Subsystem Application Server subscribes at the Policy Control Function to be notified about changes in the serving satellite of the first mobile terminal.

5. The method of any one of claims 1 to 4, comprising sending, by the Internet Multimedia Subsystem Application Server, an indication about whether the Internet Multimedia Subsystem session should be continued by routing traffic between the first mobile terminal and the other mobile terminal avoiding a core network on the ground.

6. The method of any one of claims 1 to 5, comprising determining, by the Internet Multimedia Subsystem Application Server, whether the Internet Multimedia Subsystem session should be continued by routing traffic between the first mobile terminal and the other mobile terminal avoiding a core network on the ground.

7. The method of claim 6, wherein determining whether the Internet Multimedia Subsystem session should be continued by routing traffic between the first mobile terminal and the other mobile terminal avoiding a core network on the ground comprises determining whether there is inter-satellite connectivity between the target serving satellite of the first mobile terminal and a serving satellite of the second mobile terminal.

8. The method of any one of claims 1 to 7, comprising notifying, by the Internet Multimedia Subsystem Application Server, an Internet Multimedia Subsystem component serving the second mobile about an Internet Protocol address to be used for sending data to the first mobile terminal for continuing the Internet Multimedia Subsystem session.

9. The method of claim 8, comprising including, by the Internet Multimedia Subsystem Application Server, the Internet Protocol address to be used for sending data to the first mobile terminal in the re-invite message.

10. The method of claim 8 or 9, comprising selecting, by the Internet Multimedia Subsystem Application Server, the Internet Protocol address to be used for sending data to the first mobile terminal from an Internet Protocol address of an Internet Multimedia Subsystem Access Gateway in the target serving satellite and an Internet Protocol address of an Internet Multimedia Subsystem Access Gateway in a ground network.

11. The method of claim 10, comprising sending, by the Internet Multimedia Subsystem Application Server, in reaction to an acknowledgement of the continuation of the Internet Multimedia Subsystem session by the second mobile terminal message, a further re-invite message to the first mobile terminal notifying the first mobile terminal about an Internet Protocol address to be used by the first mobile terminal for sending data to the second mobile terminal for continuing the Internet Multimedia Subsystem session.

12. The method of claim 11, comprising selecting, by the Internet Multimedia Subsystem Application Server, the Internet Protocol address to be used by the first mobile terminal for sending data to the second mobile terminal from a further Internet Protocol Address of the Internet Multimedia Subsystem Access Gateway in the target serving satellite and a further Internet Protocol Address of the Internet Multimedia Subsystem Access Gateway in the ground network.

13. The method of any one of claims 1 to 12, wherein the message comprising the identification of the target serving satellite indicates a change of serving satellite of the first mobile terminal.

14. A communication network component implementing an Internet Multimedia Subsystem Application Server and configured to perform a method of any one of claims 1 to 13.
